(19)

Europäisches Patentamt
European Patent Office
Office européen des brevets

(11) **EP 4 600 300 A1**

(12) **EUROPEAN PATENT APPLICATION**
published in accordance with Art. 153(4) EPC

(43) Date of publication:
**13.08.2025 Bulletin 2025/33**

(21) Application number: 24845676.6

(22) Date of filing: **25.07.2024**

(51) International Patent Classification (IPC):
*C08L 27/18* (2006.01)   *B29B 9/12* (2006.01)
*C08K 3/011* (2018.01)   *C08K 3/22* (2006.01)
*C08L 15/02* (2006.01)   *F16L 11/04* (2006.01)

(52) Cooperative Patent Classification (CPC):
**B29B 7/38; B29B 9/12; C08J 3/215; C08K 3/011;
C08K 3/22; C08L 15/02; C08L 27/12; C08L 27/18;
F16L 11/04**

(86) International application number:
**PCT/JP2024/026668**

(87) International publication number:
**WO 2025/023302 (30.01.2025 Gazette 2025/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.07.2023 JP 2023122809**

(71) Applicant: DAIKIN INDUSTRIES, LTD.
**Osaka-shi, Osaka 530-0001 (JP)**

(72) Inventors:
• **ONO, Tsuyoshi**
  **Osaka-Shi, Osaka 530-0001 (JP)**
• **UEDA, Akinori**
  **Osaka-Shi, Osaka 530-0001 (JP)**
• **KITAGAWA, Michiko**
  **Osaka-Shi, Osaka 530-0001 (JP)**
• **IRIE, Masaki**
  **Osaka-Shi, Osaka 530-0001 (JP)**

(74) Representative: **Hoffmann Eitle
Patent- und Rechtsanwälte PartmbB
Arabellastraße 30
81925 München (DE)**

(54) **THERMOPLASTIC POLYMER COMPOSITION AND METHOD FOR PRODUCING SAME**

(57)   The present disclosure provides a thermoplastic polymer composition comprising a fluororesin (A), a crosslinked fluoroelastomer (B), and magnesium oxide (C), wherein the fluororesin (A) is a copolymer that contains ethylene unit and tetrafluoroethylene unit; wherein the crosslinked fluoroelastomer (B) is obtained by subjecting a fluoroelastomer (b) to a dynamic crosslinking treatment in the presence of the fluororesin (A), the magnesium oxide (C), and a cross-linking agent (D) under conditions for melting the fluororesin (A); wherein the magnesium oxide (C) has a volume-based 10% particle size of 1.0 $\mu$m or less; and wherein a mass ratio between the fluororesin (A) and the crosslinked fluoroelastomer (B) ((A)/(B)) is 50/50 to 95/5.

Figure 1

5.0kV 11.5mm x2.00k SE(U)                20.0um

EP 4 600 300 A1

## Description

TECHNICAL FIELD

The present disclosure relates to a thermoplastic polymer composition and a method for producing the same.

BACKGROUND ART

Patent Document 1 describes a thermoplastic polymer composition comprising 10 to 95% by weight of a fluororesin (A) and 90 to 5% by weight of a crosslinked fluoroelastomer (B), wherein the fluororesin (A) is composed of a fluorine-containing ethylenic polymer (a) with a melting point of 120 to 330°C; and wherein the crosslinked fluoroelastomer (B) is obtained by subjecting at least one fluoroelastomer (b-1) or fluorine-containing thermoplastic elastomer (b-2) to a dynamic crosslinking treatment in the presence of the fluororesin (A) and a cross-linking agent (C) under melting conditions.

RELATED ART

PATENT DOCUMENTS

Patent Document 1: International Publication No. WO 2006/057331

SUMMARY OF THE INVENTION

PROBLEM TO BE SOLVED BY THE INVENTION

An object of the present disclosure is to provide a thermoplastic polymer composition that can be produced with high productivity and has excellent bending resistance.

MEANS FOR SOLVING THE PROBLEM

According to the present disclosure, provided is a thermoplastic polymer composition comprising a fluororesin (A), a crosslinked fluoroelastomer (B), and magnesium oxide (C), wherein the fluororesin (A) is a copolymer that contains ethylene unit and tetrafluoroethylene unit; wherein the crosslinked fluoroelastomer (B) is obtained by subjecting a fluoroelastomer (b) to a dynamic crosslinking treatment in the presence of the fluororesin (A), the magnesium oxide (C), and a cross-linking agent (D) under conditions for melting the fluororesin (A); wherein the magnesium oxide (C) has a volume-based 10% particle size of 1.0 $\mu$m or less; and wherein a mass ratio between the fluororesin (A) and the crosslinked fluoroelastomer (B) ((A)/(B)) is 50/50 to 95/5.

EFFECTS OF INVENTION

According to the present disclosure, a thermoplastic polymer composition that can be produced with high productivity and has excellent bending resistance can be provided.

BRIEF DESCRIPTION OF DRAWINGS

Figure 1 is an image of a cutting section of the thermoplastic polymer composition produced in Experimental Example 1.
Figure 2 is an image of a cutting section of the thermoplastic polymer composition produced in Comparative Example 4.

DESCRIPTION OF EMBODIMENTS

Hereinafter, specific embodiments of the present disclosure will be described in detail, but the present disclosure is not limited to the following embodiments.
A thermoplastic polymer composition of the present disclosure contains a fluororesin (A), a crosslinked fluoroelastomer (B), and magnesium oxide(C).

(Fluororesin (A))

The fluororesin (A), which is to be used in the present disclosure, is a copolymer that contains ethylene unit and a tetrafluoroethylene (TFE) unit. The thermoplastic polymer composition of the present disclosure contains the fluororesin (A), which contains ethylene unit and a TFE unit, and is therefore excellent in barrier properties against fuel and formability.

The molar ratio between the ethylene unit and the TFE unit in the copolymer described above (ethylene unit/TFE unit) is preferably 10/90 or more, more preferably 15/85 or more, and further preferably 20/80 or more, and is preferably 80/20 or less, more preferably 63/37 or less, and further preferably 62/38 or less.

The fluororesin (A) may be a copolymer composed of ethylene and TFE, as well as a monomer that is copolymerizable with ethylene and TFE. Examples of the copolymerizable monomer include monomers represented by the following formulas:

$CH_2=CX^5Rf^3$, $CF_2=CFRf^3$, $CF_2=CFORf^3$, and $CH_2=C(Rf^3)_2$

wherein $X^5$ represents H or F, and $Rf^3$ represents a fluoroalkyl group optionally containing an ether bond. Among the above, at least one selected from the group consisting of fluorine-containing vinyl monomers represented by $CF_2=CFRf^3$, $CF_2=CFORf^3$, and $CH_2=CX^5Rf^3$ is preferable, at least one selected from the group consisting of HFP, a perfluoro(alkyl vinyl ether) represented by $CF_2=CF-ORf^4$, wherein $Rf^4$ represents a perfluoroalkyl group having 1 to 5 carbon atoms, and a fluorine-containing vinyl monomer represented by $CH_2=CX^5Rf^3$, wherein $Rf^3$ is a fluoroalkyl group having 1 to 8 carbon atoms is more preferable, and HFP is further preferable.

Alternatively, the monomer that is copolymerizable with ethylene and TFE may be an aliphatic unsaturated carboxylic acid such as itaconic acid or itaconic anhydride.

The content of the ethylene unit and the TFE unit in the copolymer described above is preferably 90 to 100 mol%, more preferably 95 mol% or more, and further preferably 99.9 mol% or more based on the entire monomer units of the copolymer, since the thermoplastic polymer composition can be produced with even higher productivity and a thermoplastic polymer composition having further excellent bending resistance can be obtained.

The content of the monomer unit that is copolymerizable with ethylene and TFE in the copolymer described above is preferably 0 to 10 mol%, more preferably 5 mol% or less, and further preferably 0.1 mol% or less based on the entire monomer units of the copolymer, since the thermoplastic polymer composition can be produced with even higher productivity and a thermoplastic polymer composition having further excellent bending resistance can be obtained.

The fluororesin (A) is also preferably a TFE/ethylene/HFP copolymer containing a monomer unit based on HFP (HFP unit). In the TFE/ethylene/HFP copolymer, TFE/ethylene/HFP is preferably 40 to 65/30 to 60/0.5 to 20, and more preferably 40 to 65/30 to 60/0.5 to 10 in a molar ratio.

The content of each monomer unit in the fluororesin (A) can be calculated by appropriately combining NMR, FT-IR, elemental analysis and X-ray fluorescence analysis depending on the type of monomer.

The melting point of the fluororesin (A) is preferably 160°C or higher, more preferably 170°C or higher, further preferably 180°C or higher, and particularly preferably 190°C or higher, and is preferably lower than 324°C, more preferably 320°C or lower, further preferably 300°C or lower, particularly preferably 280°C or lower, and most preferably 260°C or lower, since the thermoplastic polymer composition can be produced with even higher productivity and a thermoplastic polymer composition having further excellent bending resistance can be obtained.

The melt flow rate (MFR) (297°C) of the fluororesin (A) is preferably 0.5 g/10 min or more, more preferably 2.0 g/10 min or more, further preferably 5.0 g/10 min or more, particularly preferably 8.0 g/10 min or more, and most preferably 10 g/10 min or more, and is preferably 100 g/10 min or less, more preferably 50 g/10 min or less, further preferably 40 g/10 min or less, and particularly preferably 35 g/10 min or less, since the thermoplastic polymer composition can be produced with even higher productivity and a thermoplastic polymer composition having further excellent bending resistance can be obtained. Measurement of the MFR of the fluororesin (A) is carried out at a temperature of 297°C and a load of 5 kg.

(Crosslinked Fluoroelastomer (B))

The crosslinked fluoroelastomer (B) contained in the thermoplastic polymer composition of the present disclosure is obtained by subjecting a fluoroelastomer (b) to a dynamic crosslinking treatment in the presence of the fluororesin (A), the magnesium oxide (C), and a cross-linking agent (D) under conditions for melting the fluororesin (A). The thermoplastic polymer composition of the present disclosure contains the crosslinked fluoroelastomer (B), and is therefore excellent in barrier properties against fuel and flexibility.

Subjecting the fluoroelastomer (b) to a dynamic crosslinking treatment refers to dynamically crosslinking an uncrosslinked fluoroelastomer (b) simultaneously with melt kneading using a Banbury mixer, a pressurizing kneader, an extruder or the like. The use of an extruder such as twin screw extruder for the crosslinking treatment is preferable in that high shear force can be applied to the kneaded material.

The crosslinking treatment under melting conditions means that the uncrosslinked fluoroelastomer (b) is subjected to the crosslinking treatment at a temperature of the melting point of the fluororesin (A) or higher. The temperature of the crosslinking treatment is preferably the melting point of the fluororesin (A) or higher, more preferably 330°C or lower, and further preferably 320°C or lower. As long as it is a temperature of the melting point of the fluororesin (A) or higher, the temperature of the crosslinking treatment may be 150°C or higher, but it is preferably 220°C or higher and more preferably 240°C or higher. By setting the temperature of crosslinking treatment to the range described above, the fluororesin (A) and the crosslinked fluoroelastomer (B) can be sufficiently kneaded while thermal degradation of the uncrosslinked fluoroelastomer (b) can be suppressed.

The crosslinked fluoroelastomer (B) is obtained by crosslinking the uncrosslinked fluoroelastomer (b).

In the present disclosure, the fluoroelastomer refers to an amorphous fluoropolymer. "Amorphous" means that the magnitude of the melting peak ($\Delta H$) appearing in differential scanning calorimetry [DSC] (temperature-increasing rate: 10°C/min) or differential thermal analysis [DTA] (temperature-increasing rate: 10°C/min) of the fluoropolymer is 4.5 J/g or less. The fluoroelastomer exhibits elastomeric characteristics when crosslinked. The elastomeric characteristics mean characteristics that allow the polymer to be stretched and to retain its original length when the force required to stretch the polymer is no longer applied.

Examples of the fluoroelastomer (b) include a perfluoroelastomer, a partially fluorinated elastomer, and a fluorine-containing thermoplastic elastomer. As the fluoroelastomer (b), a partially fluorinated elastomer is preferable, since the thermoplastic polymer composition can be produced with even higher productivity and a thermoplastic polymer composition having further excellent bending resistance can be obtained.

In the present disclosure, the partially fluorinated elastomer is a fluoropolymer that contains a fluoromonomer unit and has a content of a perfluoromonomer unit of less than 90 mol% based on the entire monomer units, the fluoropolymer having a glass transition temperature of 20°C or lower and a magnitude of the melting peak ($\Delta H$) of 4.5 J/g or less.

In the present disclosure, the perfluoromonomer is a monomer that is free from carbon atom-hydrogen atom bonds in the molecule. The perfluoromonomer described above may be a monomer having, in addition to carbon and fluorine atoms, chlorine atoms that have replaced some of the fluorine atoms bonded to carbon atoms, and may also have a nitrogen atom, an oxygen atom, a sulfur atom, a phosphorus atom, a boron atom, or a silicon atom in addition to carbon atoms. The perfluoromonomer described above is preferably a monomer in which all hydrogen atoms are replaced by fluorine atoms. The perfluoromonomer described above does not include monomers that provide a crosslinking site.

Examples of the fluoroelastomer (b) include a vinylidene fluoride (VdF)-based fluoroelastomer, a tetrafluoroethylene (TFE)/propylene (Pr)-based fluoroelastomer, a tetrafluoroethylene (TFE)/propylene/vinylidene fluoride (VdF)-based fluoroelastomer, an ethylene/hexafluoropropylene (HFP)-based fluoroelastomer, an ethylene/hexafluoropropylene (HFP)/vinylidene fluoride (VdF)-based fluoroelastomer, and an ethylene/hexafluoropropylene (HFP)/tetrafluoroethylene (TFE)-based fluoroelastomer. Among the above, the fluoroelastomer (b) is preferably at least one selected from the group consisting of a vinylidene fluoride-based fluoroelastomer and a tetrafluoroethylene/propylene-based fluoroelastomer.

The vinylidene fluoride-based fluoroelastomer is preferably a copolymer composed of 45 to 85 mol% of vinylidene fluoride and 55 to 15 mol% of at least one other monomer that is copolymerizable with vinylidene fluoride, and is more preferably a copolymer composed of 50 to 80 mol% of vinylidene fluoride and 50 to 20% of at least one other monomer that is copolymerizable with vinylidene fluoride.

Examples of the at least one other monomer that is copolymerizable with vinylidene fluoride include a monomer such as tetrafluoroethylene [TFE], hexafluoropropylene [HFP], a fluoroalkyl vinyl ether, chlorotrifluoroethylene [CTFE], trifluoroethylene, trifluoropropylene, pentafluoropropylene, trifluorobutene, tetrafluoroisobutene, hexafluoroisobutene, vinyl fluoride, a fluoromonomer represented by the general formula (100) : $CHX^{101}=CX^{102}Rf^{101}$, wherein one of $X^{101}$ and $X^{102}$ is H and the other is F, and $Rf^{101}$ is a linear or branched fluoroalkyl group having 1 to 12 carbon atoms, a fluoromonomer represented by the general formula (170): $CH_2=CH-(CF_2)_n-X^{171}$, wherein $X^{171}$ is H or F and n is an integer of 3 to 10, and a monomer providing a crosslinking site; and a non-fluorinated monomer such as ethylene, propylene, and an alkyl vinyl ether. These monomers may each be used singly, or may be used in any combination.

The fluoroalkyl vinyl ether is preferably perfluoro(methyl vinyl ether) or perfluoro(propyl vinyl ether), and is more preferably perfluoro(methyl vinyl ether). These monomers may each be used singly, or may be used in any combination.

The fluoromonomer represented by the general formula (100) is preferably 2,3,3,3-tetrafluoropropylene or 1,3,3,3-tetrafluoropropylene, and is more preferably 2,3,3,3-tetrafluoropropylene.

Among the above, the at least one other monomer that is copolymerizable with vinylidene fluoride is preferably at least one selected from the group consisting of TFE, HFP, a fluoroalkyl vinyl ether, CTFE, and a fluoromonomer represented by the general formula (100), and is more preferably at least one selected from the group consisting of TFE, HFP, a fluoroalkyl vinyl ether, and 2,3,3,3-tetrafluoropropylene.

Specific examples of the vinylidene fluoride-based fluoroelastomer include a VdF/HFP-based elastomer, a VdF/HFP/TFE-based elastomer, a VdF/CTFE-based elastomer, a VdF/CTFE/TFE-based elastomer, a VdF/fluoromonomer represented by the general formula (100)-based elastomer, a VdF/fluoromonomer represented by the general formula (100)/TFE-based elastomer, a VdF/perfluoro(methyl vinyl ether) (PMVE)-based elastomer, a VdF/PMVE/TFE-based elastomer and a VdF/PMVE/TFE/HFP-based elastomer. Among the above, at least one selected from the group consisting of a VdF/HFP-based elastomer, a VdF/HFP/TFE-based elastomer, and a VdF/2,3,3,3-tetrafluoropropylene-based elastomer is preferable, and at least one selected from the group consisting of a VdF/HFP-based elastomer and a VdF/HFP/TFE-based elastomer is more preferable.

The VdF/HFP-based elastomer is preferably one in which the molar ratio of VdF/HFP is 45 to 85/55 to 15, more preferably 50 to 80/50 to 20, and further preferably 60 to 80/40 to 20.

The VdF/HFP/TFE-based elastomer is preferably one in which the molar ratio of VdF/HFP/TFE is 40 to 80/10 to 35/10 to 35.

The VdF/2,3,3,3-tetrafluoropropylene-based elastomer is preferably one in which the molar ratio of VdF/2,3,3,3-tetrafluoropropylene is 45 to 85/55 to 15, more preferably 50 to 80/50 to 20, and further preferably 60 to 80/40 to 20.

The tetrafluoroethylene/propylene-based fluoroelastomer is preferably a copolymer composed of 45 to 70 mol% of tetrafluoroethylene, 55 to 30 mol% of propylene, and 0 to 5 mol% of a fluoromonomer that provides a crosslinking site.

The content of each monomer unit in the fluoroelastomer (b) mentioned above can be calculated with appropriately combining NMR, FT-IR, elemental analysis and X-ray fluorescence analysis depending on the type of monomer.

The fluoroelastomer (b) is also preferably composed of a copolymer containing a monomer unit derived from a monomer that provides a crosslinking site. Examples of the monomer that provides a crosslinking site include an iodine-containing monomer such as perfluoro(6,6-dihydro-6-iodo-3-oxa-1-hexene) and perfluoro(5-iodo-3-oxa-1-pentene) as described in Japanese Patent Publication No. 5-63482 and Japanese Patent Laid-Open No. 7-316234; a bromine-containing monomer as described in Japanese Translation of PCT International Application Publication No. 1992-505341; and a cyano group-containing monomer, a carboxyl group-containing monomer, and an alkoxycarbonyl group-containing monomer as described in Japanese Translation of PCT International Application Publication Nos. 1992-505345 and 1993-500070.

The fluoroelastomer (b) may be one obtained by using a chain transfer agent upon polymerization. As the chain transfer agent described above, a bromine compound or an iodine compound may be used. Examples of the polymerization method carried out using a bromine compound or an iodine compound include a method in which emulsion polymerization is carried out in an aqueous medium under practically anoxic conditions and in the presence of a bromine compound or an iodine compound, while under pressure. Representative examples of the bromine compound or iodine compound to be used include a compound represented by the following general formula:

$$R^2I_xBr_y$$

wherein x and y are each an integer of 0 to 2 and satisfy $1 \leq x + y \leq 2$, and $R^2$ is a saturated or unsaturated fluorohydrocarbon group or chlorofluorohydrocarbon group having 1 to 16 carbon atoms, or a hydrocarbon group having 1 to 3 carbon atoms, and may contain an oxygen atom. The use of a bromine compound or an iodine compound introduces iodine or bromine into the polymer and functions as a crosslinking point.

The fluorine content in the fluoroelastomer (b) is preferably 55 to 73% by mass, more preferably 61% by mass or more, further preferably 63% by mass or more, still further preferably 65% by mass or more, particularly preferably 67% by mass or more, and most preferably 69% by mass or more, and is more preferably less than 71% by mass. The fluorine content in the fluoroelastomer can be determined by calculation from the composition of the fluoroelastomer as measured by $^{19}$F-NMR.

The Mooney viscosity (ML 1+10 (100°C)) of the fluoroelastomer (b) at 100°C is preferably 2 or more, more preferably 5 or more, and further preferably 10 or more, since the thermoplastic polymer composition can be produced with even higher productivity and a thermoplastic polymer composition having further excellent bending resistance can be obtained. Also, it is preferably 200 or less, more preferably 120 or less, and further preferably 100 or less. The Mooney viscosity is a value measured in accordance with ASTM-D1646-15 and JIS K6300-1:2013.

(Magnesium Oxide (C))

The thermoplastic polymer composition of the present disclosure contains the magnesium oxide (C). The magnesium oxide (C) has a volume-based 10% particle size of 1.0 μm or less. The thermoplastic polymer composition of the present disclosure contains magnesium oxide with such a small particle size, and therefore can be produced with high productivity and also has excellent bending resistance.

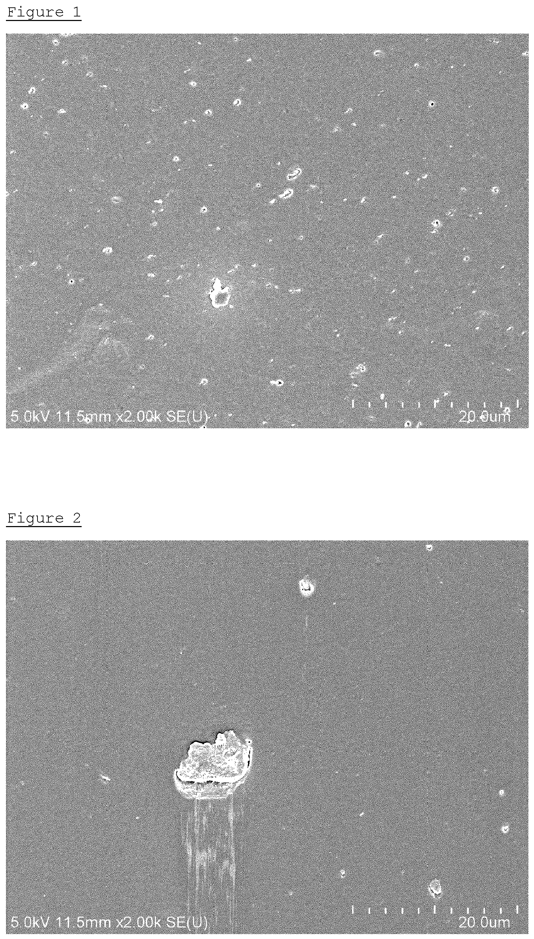

As shown in the image of Figure 1 described later, it was found that the use of the magnesium oxide (C) with a volume-based 10% particle size of 1.0 μm or less can suppress aggregation among particles of the magnesium oxide (C) when the magnesium oxide (C) is kneaded with the fluororesin (A) and the fluoroelastomer (b), and accordingly, the magnesium oxide (C) can be highly dispersed in the composition. As a result, it is considered that there are almost no aggregated clumps in the finally obtained thermoplastic polymer composition that serve as starting points for the occurrence of cracks, and that bending resistance is improved.

The volume-based 10% particle size of the magnesium oxide (C) is 1.0 μm or less, and since the thermoplastic polymer composition can be produced with even higher productivity and a thermoplastic polymer composition having further excellent bending resistance can be obtained, it is preferably 0.8 μm or less, more preferably 0.6 μm or less, and further preferably 0.4 μm or less, and is preferably 0.1 μm or more.

The volume-based 50% particle size of the magnesium oxide (C) is preferably 2.0 μm or less, more preferably 1.5 μm or less, and further preferably 1.0 μm or less, and is preferably 0.1 μm or more, since the thermoplastic polymer composition can be produced with even higher productivity and a thermoplastic polymer composition having further excellent bending resistance can be obtained.

The volume-based 90% particle size of the magnesium oxide (C) is preferably 5.0 μm or less, more preferably 2.5 μm or less, and further preferably 1.5 μm or less, and is preferably 0.1 μm or more, since the thermoplastic polymer composition can be produced with even higher productivity and a thermoplastic polymer composition having further excellent bending resistance can be obtained.

The 10% particle size of the magnesium oxide (C) is the volume-based cumulative 10% particle size, which can be measured by the laser diffraction and scattering method. The volume-based 50% particle size of the magnesium oxide (C) is the volume-based cumulative 50% particle size, which can be measured by the laser diffraction and scattering method. The volume-based 90% particle size of the magnesium oxide (C) is the volume-based cumulative 90% particle size, which can be measured by the laser diffraction and scattering method.

The purity of the magnesium oxide (C) is preferably 99.0% by mass or more. The purity of the magnesium oxide (C) within the range described above further improves the degree of crosslinking of the crosslinked fluoroelastomer (B). The purity of the magnesium oxide (C) can be measured by, for example, the ICP spectrometry.

The content of the magnesium oxide (C) is preferably 0.01 to 10 parts by mass, more preferably 1.0 part by mass or more, and further preferably 2.0 parts by mass or more, and is more preferably 9.0 parts by mass or less, further preferably 8.0 parts by mass or less, and particularly preferably 7.0 parts by mass or less, based on 100 parts by mass of the fluoroelastomer (b), since the thermoplastic polymer composition can be produced with even higher productivity and a thermoplastic polymer composition having further excellent bending resistance can be obtained.

(Cross-linking Agent (D))

In the present disclosure, the cross-linking agent (D) is used when obtaining the crosslinked fluoroelastomer (B). Examples of the cross-linking agent include cross-linking agents normally used in polyol crosslinking, polyamine crosslinking, and peroxide crosslinking. The cross-linking agent is preferably at least one selected from the group consisting of a polyhydroxy compound, a polyamine compound, and a peroxide, and more preferably a polyhydroxy compound.

Examples of the polyamine compound include polyamine compounds such as hexamethylenediamine carbamate, N,N'-dicinnamylidene-1,6-hexamethylenediamine, and 4,4'-bis(aminocyclohexyl)methane carbamate. Among the above, N,N'-dicinnamylidene-1,6-hexamethylenediamine is preferable.

The content of the polyamine compound is preferably 0.05 to 10 parts by mass, and more preferably 0.5 to 5 parts by mass, based on 100 parts by mass of the fluoroelastomer (b).

As the polyhydroxy compound, a polyhydroxy aromatic compound is suitably used in view of excellent heat resistance. The polyhydroxy aromatic compound is not limited, and examples thereof include 2,2-bis(4-hydroxyphenyl) propane (hereinafter, referred to as bisphenol A), 2,2-bis(4-hydroxyphenyl)perfluoropropane (hereinafter, referred to as bisphenol AF), resorcin, 1,3-dihydroxybenzene, 1,7-dihydroxynaphthalene, 2,7-dihydroxynaphthalene, 2,6-dihydroxynaphthalene, 1,6-dihydroxynaphthalene, 4,4'-dihydroxydiphenyl, 4,4'-dihydroxystilbene, 2,6-dihydroxyanthracene, hydroquinone, catechol, 2,2-bis(4-hydroxyphenyl)butane (hereinafter, referred to as bisphenol B), 4,4-bis(4-hydroxyphenyl) valeric acid, 2,2-bis(4-hydroxyphenyl)tetrafluorodichloropropane, 4,4'-dihydroxydiphenylsulfone, 4,4'-dihydroxydiphenyl ketone, tri(4-hydroxyphenyl)methane, 3,3',5,5'-tetrachlorobisphenol A, and 3,3',5,5'-tetrabromobisphenol A. Among the above, bisphenol AF is preferable.

The content of the polyhydroxy compound is preferably 0.05 to 10 parts by mass, and more preferably 0.5 to 5 parts by mass, based on 100 parts by mass of the fluoroelastomer (b) .

When the cross-linking agent is a polyhydroxy compound, the crosslinked fluoroelastomer (B) is preferably obtained by subjecting the fluoroelastomer (b) to a dynamic crosslinking treatment in the presence of a crosslinking accelerator, in addition to the fluororesin (A), the magnesium oxide (C), and the cross-linking agent (D), under conditions for melting the fluororesin (A). The crosslinking accelerator promotes production of intramolecular double bonds in the dehydrofluoric acid reaction of the polymer main chain and addition of the polyhydroxy compound to the produced double bonds.

Examples of the crosslinking accelerator include an onium compound. Among onium compounds, at least one selected from the group consisting of an ammonium compound such as a quaternary ammonium salt, a phosphonium compound such as a quaternary phosphonium salt, an oxonium compound, a sulfonium compound, a cyclic amine, and a monofunctional amine compound is preferable, and at least one selected from the group consisting of a quaternary ammonium salt and a quaternary phosphonium salt is more preferable.

The quaternary ammonium salt is not limited, and examples thereof include 8-methyl-1,8-diazabicyclo[5.4.0]-7-undecenium chloride, 8-methyl-1,8-diazabicyclo[5.4.0]-7-undecenium iodide, 8-methyl-1,8-diazabicyclo[5.4.0]-7-undecenium hydroxide, 8-methyl-1,8-diazabicyclo[5.4.0]-7-undecenium methylsulfate, 8-ethyl-1,8-diazabicyclo[5.4.0]-7-undecenium bromide, 8-propyl-1,8-diazabicyclo[5.4.0]-7-undecenium bromide, 8-dodecyl-1,8-diazabicyclo[5.4.0]-7-undecenium chloride, 8-dodecyl-1,8-diazabicyclo[5.4.0]-7-undecenium hydroxide, 8-eicosyl-1,8-diazabicyclo[5.4.0]-7-undecenium chloride, 8-tetracosyl-1,8-diazabicyclo[5.4.0]-7-undecenium chloride, 8-benzyl-1,8-diazabicyclo[5.4.0]-7-undecenium chloride (hereinafter, referred to as DBU-B), 8-benzyl-1,8-diazabicyclo[5.4.0]-7-undecenium hydroxide, 8-phenethyl-1,8-diazabicyclo[5.4.0]-7-undecenium chloride, and 8-(3-phenylpropyl)-1,8-diazabicyclo[5.4.0]-7-undecenium chloride. Among the above, DBU-B is preferable in view of excellent crosslinkability and various physical properties.

The quaternary phosphonium salt is not limited, and examples thereof may include tetrabutylphosphonium chloride, benzyltriphenylphosphonium chloride (hereinafter, referred to as BTPPC), benzyltrimethylphosphonium chloride, benzyltributylphosphonium chloride, tributylallylphosphonium chloride, tributyl-2-methoxypropylphosphonium chloride, and benzylphenyl(dimethylamino)phosphonium chloride. Among the above, benzyltriphenylphosphonium chloride (BTPPC) is preferable in view of excellent crosslinkability and various physical properties.

Although the content of the crosslinking accelerator is not limited, it is preferably 0.05 to 5 parts by mass, and more preferably 0.1 to 1 part by mass, based on 100 parts by mass of the fluoroelastomer (b).

The use of a solid solution of bisphenol AF and benzyltriphenylphosphonium (free from chlorine atoms) as the cross-linking agent and crosslinking accelerator is also one of the preferred embodiments. The mass ratio between benzyltriphenylphosphonium and bisphenol AF in the solid solution is preferably 1:2 to 1:4 in consideration of the dispersibility of the solid solution in the composition.

The content of the solid solution (for example, in the case of a solid solution in which the mass ratio between benzyltriphenylphosphonium and bisphenol AF is 1:4) is preferably 0.1 to 2.0 parts by mass based on 100 parts by mass of the fluoroelastomer (b) in consideration of crosslinkability and dispersibility.

The peroxide is not limited as long as it is a cross-linking agent normally used in peroxide crosslinking, and in general, those that easily generate peroxy radicals under heat or in the presence of a redox system are favorable. Specific examples thereof may include 1,1-bis(t-butylperoxy)-3,5,5-trimethylcyclohexane, 2,5-dimethylhexane-2,5-dihydroperoxide, di-t-butyl peroxide, t-butyl cumyl peroxide, dicumyl peroxide, $\alpha,\alpha'$-bis(t-butylperoxy)-p-diisopropylbenzene, 2,5-dimethyl-2,5-bis(t-butylperoxy) hexane, 2,5-dimethyl-2,5-bis(t-butylperoxy)-hexyne-3, benzoyl peroxide, t-butylperoxybenzene, 2,5-dimethyl-2,5-di(benzoylperoxy)hexane, t-butylperoxymaleic acid, t-butylperoxy isopropyl carbonate, and t-butylperoxy benzoate. Among the above, 2,5-dimethyl-2,5-bis(t-butylperoxy)hexane and 2,5-dimethyl-2,5-bis(t-butylperoxy)-hexyne-3 are preferable.

The content of the peroxide is preferably 0.05 to 10 parts by mass, and more preferably 1.0 to 5 parts by mass, based on 100 parts by mass of the fluoroelastomer (b).

When the cross-linking agent is a peroxide, the crosslinked fluoroelastomer (B) is preferably obtained by subjecting the fluoroelastomer (b) to a dynamic crosslinking treatment in the presence of a polyfunctional crosslinking aid, in addition to the fluororesin (A), the magnesium oxide (C), and the cross-linking agent (D), under conditions for melting the fluororesin (A).

Examples of the polyfunctional crosslinking aid include triallyl cyanurate, trimetallyl isocyanurate, triallyl isocyanurate (TAIC), triacrylformal, triallyl trimellitate, N,N'-m-phenylenebismaleimide, dipropargyl terephthalate, diallyl phthalate, tetraallyl terephthalate amide, triallyl phosphate, bismaleimide, fluorinated triallyl isocyanurate (1,3,5-tris(2,3,3-trifluoro-2-propenyl)-1,3,5-triazine-2,4,6-trione), tris(diallylamine)-S-triazine, triallyl phosphite, N,N-diallylacrylamide, 1,6-divinyldodecafluorohexane, hexaallyl phosphoramide, N,N,N',N'-tetraallyl phthalamide, N,N,N',N'-tetraallyl malonamide, trivinyl isocyanurate, 2,4,6-trivinylmethyltrisiloxane, tri(5-norbornene-2-methylene) cyanurate, and triallyl phosphite. Among the above, triallyl isocyanurate (TAIC) is preferable. When kneading the fluoroelastomer and the polyfunctional crosslinking aid, inert inorganic powder or other materials impregnated with the polyfunctional crosslinking aid may also be used.

The content of the polyfunctional crosslinking aid is preferably 0.1 to 10 parts by mass, and more preferably 0.5 to 5 parts by mass, based on 100 parts by mass of the fluoroelastomer (b).

(Acid Acceptor (Excluding Magnesium Oxide))

The thermoplastic polymer composition of the present disclosure may contain an acid acceptor other than magnesium oxide. Examples of the acid acceptor (excluding magnesium oxide) may include magnesium hydroxide, barium hydroxide, magnesium carbonate, barium carbonate, quick lime, slaked lime, calcium hydroxide, calcium carbonate, calcium silicate, calcium stearate, zinc stearate, calcium phthalate, calcium phosphite, tin oxide, and basic tin phosphite.

The amount of the acid acceptor to be compounded is preferably 0.01 to 10 parts by mass, more preferably 0.1 to 8 parts by mass, and further preferably 0.5 to 6 parts by mass, based on 100 parts by mass of the fluoroelastomer (b).

(Thermoplastic Polymer Composition)

The thermoplastic polymer composition of the present disclosure contains the fluororesin (A), the crosslinked fluoroelastomer (B), and the magnesium oxide (C).

The mass ratio between the fluororesin (A) and the crosslinked fluoroelastomer (B) ((A)/(B)) is 50/50 to 95/5, preferably 55/45 or more, and more preferably 60/40 or more, and is preferably 90/10 or less, and more preferably 85/15 or less. By setting the mass ratio between the fluororesin (A) and the crosslinked fluoroelastomer (B) within the range described above, the thermoplastic polymer composition can be produced with high productivity and a thermoplastic polymer composition having excellent bending resistance can be obtained.

In the thermoplastic polymer composition of the present disclosure, the fluororesin (A) may form a continuous phase while the crosslinked fluoroelastomer (B) may form a dispersed phase, or the fluororesin (A) and the crosslinked fluoroelastomer (B) may form a co-continuous phase structure; however, it is preferable that the fluororesin (A) should form a continuous phase while the crosslinked fluoroelastomer (B) forms a dispersed phase. A co-continuous phase structure of the fluororesin (A) and the crosslinked fluoroelastomer (B) may be included in a part of the structure in which the fluororesin (A) forms a continuous phase while the crosslinked fluoroelastomer (B) forms a dispersed phase.

Even if the uncrosslinked fluoroelastomer (b) forms a matrix in a dispersion at first, the crosslinked fluoroelastomer (B) will form a dispersed phase or the fluororesin (A) and the crosslinked fluoroelastomer (B) will form a co-continuous phase structure as the uncrosslinked fluoroelastomer (b) is changed into the crosslinked fluoroelastomer (B) due to the crosslinking reaction. This is because the crosslinked fluoroelastomer (B) has a higher melt viscosity than the uncrosslinked fluoroelastomer (b).

The MFR (297°C) of the thermoplastic polymer composition of the present disclosure is preferably 0.5 g/10 min or more, more preferably 1.0 g/10 min or more, further preferably 5.0 g/10 min or more, particularly preferably 8 g/10 min or more, and most preferably 10 g/10 min or more, and is preferably 100 g/10 min or less, more preferably 50 g/10 min or less, further preferably 40 g/10 min or less, and particularly preferably 30 g/10 min or less. Measurement of the MFR of the thermoplastic polymer composition is carried out at a temperature of 297°C and a load of 5 kg.

The thermoplastic polymer composition of the present disclosure has one characteristic in that it exhibits a high MIT value. In one embodiment, the thermoplastic polymer composition of the present disclosure exhibits an MIT value that is equal to or more than 1.2 times the MIT value of a thermoplastic polymer composition that has the same components, except that the magnesium oxide (C) is replaced by a magnesium oxide with a volume-based 10% particle size of 1.99 $\mu$m. The MIT value can be measured by the measurement method described in Examples. When calculating the multiplying factor of the MIT value, not only are the compositions of the thermoplastic polymer compositions other than the 10% particle size of magnesium oxide the same, but also the fabrication methods for fabricating test specimens from the thermoplastic polymer compositions are the same. For example, when test specimens are fabricated by forming any thermoplastic polymer composition under certain conditions using the extrusion forming method, the test specimens are fabricated by forming a thermoplastic polymer composition containing the magnesium oxide with a volume-based 10% particle size of 1.99 $\mu$m under the same conditions, using the extrusion forming method.

The shape of the thermoplastic polymer composition of the present disclosure is not limited and may be in the form of a powder, a pellet, a crumb, and other shapes, but is preferably in the form of a pellet since it can be produced with high productivity.

It is preferable that the thermoplastic polymer composition of the present disclosure should have electrical conductivity in order to prevent buildup of static charge and ignition. From this viewpoint, it is preferable that the thermoplastic polymer composition of the present disclosure should comprise an electrically conductive material such as carbon black and acetylene black. The amount of the electrically conductive material is preferably 0.01 to 20% by mass, more preferably 1 to 18% by mass, and further preferably 5 to 15% by mass based on the thermoplastic polymer composition of the present disclosure.

In addition, another polymer such as a polyethylene, a polypropylene, a polyamide, a polyester and a polyurethane; an inorganic filler such as talc, celite, clay, titanium oxide, carbon black and barium sulfate; a pigment; a flame retarder; a lubricant; a photostabilizer; a weathering stabilizer; an antistatic agent; an ultraviolet light absorber; an antioxidant; a mold releasing agent; a foaming agent; a flavor; an oil; and a softening agent can be added to the thermoplastic polymer composition of the present disclosure as long as they do not affect the desired effects.

(Method for Producing)

The thermoplastic polymer composition of the present disclosure can be produced by kneading a fluoroelastomer composition containing the fluororesin (A), the fluoroelastomer (b), the magnesium oxide (C), and the cross-linking agent (D) at a temperature of the melting point of the fluororesin (A) or higher.

The thermoplastic polymer composition of the present disclosure can be suitably produced by a production method in which, using an extruder equipped with a cylinder and a die, a fluoroelastomer composition containing the fluororesin (A), the fluoroelastomer (b), the magnesium oxide (C), and the cross-linking agent (D) is kneaded in the cylinder at a temperature of the melting point of the fluororesin (A) or higher, and the resulting kneaded material is extruded from the die, thereby obtaining a pellet of the thermoplastic polymer composition. The thermoplastic polymer composition of the present disclosure can be produced by such a production method, and as described later, it can be produced with high productivity since the extrusion pressure is not easily increased when produced by such a production method.

In the production method described above, the fluoroelastomer (b) is dynamically crosslinked when kneading the fluoroelastomer composition, and the thermoplastic polymer composition comprising the fluororesin (A) and the crosslinked fluoroelastomer (B) can be obtained.

In the production method described above, the fluoroelastomer (b), the cross-linking agent (D), and the crosslinking accelerator may be kneaded to prepare a fluoroelastomer compound, then a fluoroelastomer composition containing the compound, the fluororesin (A), and the magnesium oxide (C) may be kneaded at a temperature of the melting point of the fluororesin (A) or higher, and the resulting kneaded material may be extruded from the die.

For the kneading, a Banbury mixer, a pressurizing kneader, an extruder, or the like can be used.

The production method of the present disclosure can be characterized in that, when the extrusion of the kneaded material from the die is continued for 60 minutes, the rate of change in pressure calculated by the following expression is 5% or less:

$$\texttt{rate of change in pressure (\%) = } (X_{60} - X_0)/X_0$$

$X_0$: pressure applied to the kneaded material in the die at the time of extrusion initiation (MPa)

$X_{60}$: pressure applied to the kneaded material in the die after 60 minutes have elapsed since extrusion initiation (MPa) .

Since the production method of the present disclosure uses the magnesium oxide (C), which has a particle size within the range described above, the extrusion pressure is not easily increased even when the extrusion of the kneaded material from the die is continued for a long time, and accordingly, the thermoplastic polymer composition (pellets) can be produced with high productivity.

(Formed Article)

A formed article of the present disclosure can be obtained by forming the thermoplastic polymer composition mentioned above. The shape of the formed article described above is not limited, and examples thereof include a tube, a hose, a sheet and a film.

The formed article described above can be produced by using a general forming processing method or a general forming processing apparatus. As the forming processing method, any method such as injection molding, extrusion forming, compression molding, blow molding, calendering and vacuum forming can be employed, for example.

The formed article of the present disclosure can also form a layer of a laminated product, for example. Examples of the laminated product include a laminated product comprising a layer composed of the formed article of the present disclosure and a layer composed of another material. Examples of the other material include a fluororesin, a non-fluororesin, a fluoroelastomer, and a non-fluoroelastomer.

Examples of the fluororesin include a tetrafluoroethylene (TFE)/perfluoro(alkyl vinyl ether) (PAVE) copolymer, a tetrafluoroethylene (TFE)/hexafluoropropylene (HFP) copolymer, a TFE/ethylene copolymer [ETFE], a TFE/ethylene/HFP copolymer, a chlorotrifluoroethylene (CTFE)/ethylene copolymer [ECTFE], a polyvinylidene fluoride [PVdF], a polychlorotrifluoroethylene [PCTFE], a CTFE/TFE copolymer, a TFE/vinylidene fluoride (VdF) copolymer [VT], a polyvinyl fluoride [PVF], a TFE/VdF/CTFE copolymer [VTC], and a TFE/HFP/VdF copolymer.

Examples of the non-fluororesin include a polyamide resin, a polyolefin resin, a polyvinyl chloride resin, a polyurethane resin, a polyester resin, a polyaramid resin, a polyimide resin, a polyamideimide resin, a polyphenylene oxide resin, a polyacetal resin, a polycarbonate resin, an acrylic resin, a styrene-based resin, an acrylonitrile/butadiene/styrene resin [ABS], a cellulose-based resin, a polyetheretherketone resin [PEEK], a polysulfone resin, a polyethersulfone resin [PES], a polyetherimide resin, an ethylene/vinyl alcohol copolymer resin, a polyphenylene sulfide resin, a polybutylene naphthalate resin, a polybutylene terephthalate resin, and a polyphthalamide [PPA].

Examples of the fluoroelastomer include a vinylidene fluoride (VdF)-based fluoroelastomer, a tetrafluoroethylene (TFE)/propylene (Pr)-based fluoroelastomer, a tetrafluoroethylene (TFE)/propylene/vinylidene fluoride (VdF)-based fluoroelastomer, an ethylene/hexafluoropropylene (HFP)-based fluoroelastomer, an ethylene/hexafluoropropylene (HFP)/vinylidene fluoride (VdF)-based fluoroelastomer, and an ethylene/hexafluoropropylene (HFP)/tetrafluoroethylene (TFE)-based fluoroelastomer.

The non-fluoroelastomer include an acrylonitrile-butadiene rubber, a hydrogenated acrylonitrile-butadiene rubber, a blend rubber between an acrylonitrile-butadiene rubber and a polyvinyl chloride, a blend rubber between an acrylonitrile-butadiene rubber and an acrylic rubber, a chlorinated polyethylene, a fluoroelastomer, an epichlorohydrin rubber, an ethylene-propylene rubber, a chlorosulfonated polyethylene rubber, an acrylic rubber, a silicone rubber, a butyl rubber, a styrene-butadiene rubber, an ethylene-vinyl acetate copolymer, an $\alpha,\beta$-unsaturated nitrile-conjugated diene copolymer rubber and a hydrogenated product of an $\alpha,\beta$-unsaturated nitrile-conjugated diene copolymer rubber.

The thermoplastic polymer composition, formed article, and laminated product of the present disclosure are excellent in barrier properties against fuel and bending resistance. Therefore, they can be used in a variety of applications.

For example, they have suitable characteristics as a gasket, a seal such as a non-contact-type and contact-type packing (a self seal packing, a piston ring, a split ring type packing, a mechanical seal, an oil seal and the like), a bellow, a diaphragm, a hose, a tube, an electric wire and the like, for which heat resistance, oil resistance, fuel oil resistance, LLC resistance and steam resistance are required, of the engine main body of an automobile engine, main motion system, valve system, lubrication/cooling system, fuel system, intake/exhaust system and the like, transmission system and the like of drive system, chassis steering system, brake system and the like, and basic electrical component, control system electrical component, equipped electrical component and the like of electrical equipment.

Specifically, they can be used in applications listed below.

For the engine main body, a cylinder head gasket, a cylinder head cover gasket, an oil pan packing, a gasket such as a general gasket, an O-ring, a packing, a seals such as a timing belt cover gasket, a hose such as a control hose, a vibration proof rubber of an engine mount, a sealing material for high pressure valves in a hydrogen storage system, and the like.

For the main motion system, a shaft seal such as a crankshaft seal and a camshaft seal, and the like.

For the valve system, a valve stem seal for engine valves and the like.

For the lubrication/cooling system, an engine oil cooler hose of an engine oil cooler, an oil return hose, a seal gasket and the like, and a water hose around a radiator, a vacuum pump oil hose of a vacuum pump and the like.

For the fuel system, a hose for fuel, a tube for fuel, a sealing material for fuel, other fuel system members and the like. As the hose for fuel or tube for fuel, a filler (neck) hose, a fuel hose such as a fuel supply hose, a fuel return hose and a vapor (evaporation) hose, an in-tank hose of a fuel tank, a fuel piping tube, a control hose of a carburetor and the like. As the sealing material for fuel, an oil seal and the like of a fuel pump, a fuel sender seal, a filler seal, a tank packing and the like of a fuel tank, a connector O-ring and the like of a fuel piping tube, an injector cushion ring, an injector seal ring, an injector O-ring and the like of a fuel injection apparatus, and a flange gasket and the like of a carburetor. As the other fuel system members, a diaphragm, a valve and the like of a fuel pump, an in-tank fuel pump mount of a fuel tank and the like, a pressure regulator diaphragm, a check valve and the like of a fuel injection apparatus, a needle valve petal, an acceleration pump piston and the like of a carburetor, and a valve seat, a diaphragm and the like of a complex air flow control system (CAC). Among the above, the thermoplastic resin composition, formed article and laminated product of the present disclosure are suitable as a hose for fuel or tube for fuel, and especially suitable as a filler neck hose or a fuel supply hose. Also, the thermoplastic resin composition, formed article and laminated product of the present disclosure are suitable as a sealing material for fuel, and especially suitable as a fuel sender seal.

For the intake/exhaust system, an intake manifold packing, an exhaust manifold packing and the like of a manifold, a diaphragm, a control hose, an emission control hose and the like for EGR (exhaust gas recirculation), a diaphragm and the like for BPT, an afterburn prevention valve seat and the like of an AB valve, a throttle body packing of a throttle, a turbocharger turbo oil hose (supply), a turbo oil hose (return), a turbo air hose, an intercooler hose, a turbine shaft seal and the like.

For the transmission system, a transmission related bearing seal, an oil seal, an O-ring, a packing, a torque converter hose and the like, an AT transmission oil hose, an ATF hose, an O-ring, a packing and the like.

For the steering system, a power steering oil hose and the like.

For the brake system, an oil seal, an O-ring, a packing, a brake oil hose and the like, a Mastervac atmospheric valve, a vacuum valve, a diaphragm and the like, a piston cup (a rubber cup) and the like of a master cylinder, a caliper seal, a boot and the like.

For the basic electrical component, an insulator, a sheath and the like of an electric wire (harness), a tube of a harness exterior component, and the like.

For the control system electrical component, a coating material for various sensor wires, and the like.

For the equipped electrical component, an O-ring, a packing and a cooler hose of a car air conditioner, an exterior wiper blade and the like.

In addition to applications for automobiles, the thermoplastic resin composition, formed article and laminated product of the present disclosure are suitable in applications for, for example, an oil resistant, chemically resistant, heat resistant, steam resistant or weather resistant packing, O-ring, hose, other sealing material, diaphragm and valve in a transportation means such as a vessel and an aircraft; a similar packing, O-ring, sealing material, diaphragm, valve, hose, roll, tube, chemically resistant coating and lining in a chemical plant; a similar packing, O-ring, hose, sealing material, belt, diaphragm, valve, roll and tube in food plant equipment and food equipment (including household articles); a similar packing, O-ring, hose, sealing material, diaphragm, valve and tube in nuclear plant equipment; and a similar packing, O-ring, hose, sealing material, diaphragm, valve, roll, tube, lining, mandrel, electric wire, flexible joint, belt, rubber plate, weather strip, PPC copier roll blade and the like in a general industrial component.

In an application as a food rubber sealing material, problems of conventional rubber sealing materials are that they have smelling properties and that rubber fragments and the like may be mixed into food. However, by using the formed article of the present disclosure, these problems can be improved and the formed article of the present disclosure can be suitably used. Due to their chemical resistance, low elution properties and low smelling properties, the thermoplastic resin composition, formed article and laminated product of the present disclosure can be applied in the medical and chemical fields for an oil resistant, chemically resistant, heat resistant, steam resistant or weather resistant sealing material, lid material, belt, roll, hose, tube, film, coating, lining, joint, container and the like. In the general industrial field, for the purpose of improving the strength, slipperiness, chemical resistance and permeability of the rubber material, they can be suitably used for, for example, a rubber roll, an O-ring, a packing, a sealing material and the like. In particular, they can be suitably used for a packing application of a lithium ion battery because both chemical resistance and seal can be maintained at the same time. Besides, they can be suitably used in an application where slidability due to low friction is required.

Among the above, the thermoplastic polymer composition, formed article, and laminated product of the present disclosure can be suitably used as a hose for fluid transportation. Examples of the fluid may include hydrogen, refrigerant for air conditioners, inert gas, fuel, oil, and water.

Also, the thermoplastic polymer composition, formed article and laminated product of the present disclosure are suitably used as a hose for fuel or tube for fuel, and in particular, suitably used as a filler neck hose or a fuel supply hose. That is, the formed article and laminated product described above is preferably a hose for fuel or tube for fuel, and is particularly preferably a filler neck hose or a fuel supply hose.

While various embodiments have been described herein above, it is to be appreciated that various changes in form and detail may be made without departing from the spirit and scope presently or hereafter claimed.

<1> According to the first aspect of the present disclosure, provided is

a thermoplastic polymer composition comprising a fluororesin (A), a crosslinked fluoroelastomer (B), and a magnesium oxide (C),
wherein the fluororesin (A) is a copolymer that contains ethylene unit and tetrafluoroethylene unit;
wherein the crosslinked fluoroelastomer (B) is obtained by subjecting a fluoroelastomer (b) to a dynamic crosslinking treatment in the presence of the fluororesin (A), the magnesium oxide (C), and a cross-linking agent (D) under conditions for melting the fluororesin (A);
wherein the magnesium oxide (C) has a volume-based 10% particle size of 1.0 $\mu$m or less; and
wherein a mass ratio between the fluororesin (A) and the crosslinked fluoroelastomer (B) ((A)/(B)) is 50/50 to 95/5.

<2> According to the second aspect of the present disclosure, provided is
the thermoplastic polymer composition according to the first aspect, wherein the magnesium oxide (C) has a volume-based 50% particle size of 1.0 $\mu$m or less.

<3> According to the third aspect of the present disclosure, provided is
the thermoplastic polymer composition according to the first or second aspect, wherein a content of the magnesium oxide (C) is 0.01 to 10 parts by mass based on 100 parts by mass of the fluoroelastomer (b).

<4> According to the fourth aspect of the present disclosure, provided is
the thermoplastic polymer composition according to any of the first to third aspects, wherein the fluororesin (A) has a melting point of 160 to 320°C.

<5> According to the fifth aspect of the present disclosure, provided is
the thermoplastic polymer composition according to any of the first to fourth aspects, wherein the fluoroelastomer (b) is a partially fluorinated elastomer.

<6> According to the sixth aspect of the present disclosure, provided is
the thermoplastic polymer composition according to any of the first to fifth aspects, wherein the fluoroelastomer (b) is at least one selected from the group consisting of a vinylidene fluoride/hexafluoropropylene-based fluoroelastomer, a vinylidene fluoride/tetrafluoroethylene/hexafluoropropylene-based fluoroelastomer, and a tetrafluoroethylene/propylene-based fluoroelastomer.

<7> According to the seventh aspect of the present disclosure, provided is
the thermoplastic polymer composition according to any of the first to sixth aspects, wherein the cross-linking agent (D) is at least one selected from the group consisting of a polyhydroxy compound, a polyamine compound, and a peroxide.

<8> According to the eighth aspect of the present disclosure, provided is

the thermoplastic polymer composition according to any of the first to seventh aspects, exhibiting an MIT value that is equal to or more than 1.2 times an MIT value of a thermoplastic polymer composition that has the same components, except that the magnesium oxide (C) is replaced by a magnesium oxide with a volume-based 10% particle size of 1.99 μm.

<9> According to the ninth aspect of the present disclosure, provided is

the thermoplastic polymer composition according to any of the first to eighth aspects,
wherein the fluororesin (A) is a copolymer in which a molar ratio between ethylene unit and tetrafluoroethylene unit (ethylene unit/TFE unit) is 10/90 to 62/38, and a content of ethylene unit and tetrafluoroethylene unit is 90 to 100 mol% based on the entire monomer units;
wherein the fluoroelastomer (b) is a vinylidene fluoride/hexafluoropropylene-based elastomer in which a molar ratio of vinylidene fluoride/hexafluoropropylene is 45 to 85/55 to 15, or a vinylidene fluoride/tetrafluoroethylene/hexafluoropropylene-based fluoroelastomer in which a molar ratio of vinylidene fluoride/tetrafluoroethylene/hexafluoropropylene is 40 to 80/10 to 35/10 to 35;
wherein the magnesium oxide (C) has a volume-based 10% particle size of 0.1 to 0.4 um;
wherein the cross-linking agent (D) is a polyhydroxy compound;
wherein a mass ratio between the fluororesin (A) and the crosslinked fluoroelastomer (B) ((A)/(B)) is 60/40 to 85/15; and
wherein the thermoplastic polymer composition has a melt flow rate (297°C) of 1.0 to 30 g/10 min.

<10> According to the tenth aspect of the present disclosure, provided is
the thermoplastic polymer composition according to any of the first to ninth aspects, which is a pellet.
<11> According to the eleventh aspect of the present disclosure, provided is
a formed article obtained by forming the thermoplastic polymer composition according to any of the first to tenth aspects.
<12> According to the twelfth aspect of the present disclosure, provided is
the formed article according to the eleventh aspect, which is a tube or a hose.
<13> According to the thirteenth aspect of the present disclosure, provided is

a method for producing the thermoplastic polymer composition according to any of the first to tenth aspects, wherein, using an extruder equipped with a cylinder and a die, a fluoroelastomer composition containing the fluororesin (A), the fluoroelastomer (b), the magnesium oxide (C), and the cross-linking agent (D) is kneaded in the cylinder at a temperature of a melting point of the fluororesin (A) or higher, and a resulting kneaded material is extruded from the die, thereby obtaining pellet of the thermoplastic polymer composition.

<14> According to the fourteenth aspect of the present disclosure, provided is

the production method according to the thirteenth aspect, wherein, when the extrusion of the kneaded material from the die is continued for 60 minutes, a rate of change in pressure calculated by the following expression is 5% or less:

$$\text{rate of change in pressure (\%)} = (X_{60} - X_0)/X_0$$

$X_0$: pressure applied to the kneaded material in the die at the time of extrusion initiation (MPa)
$X_{60}$: pressure applied to the kneaded material in the die after 60 minutes have elapsed since extrusion initiation (MPa).

EXAMPLES

Hereinafter, embodiments of the present disclosure will be described with reference to Examples, but the present disclosure is not limited solely to such Examples.

Each numerical value in Examples was measured according to the following method.

Monomeric Composition

The monomeric composition was measured by $^{19}$F-NMR analysis.

Melting Point

The melting point was obtained by recording the melting peak upon increasing the temperature at a rate of 10°C/min using a differential scanning calorimeter [DSC] and determining a temperature corresponding to the maximum value.

Melt Flow Rate (MFR)

The MFR was obtained by measuring the mass (g) of a polymer flowing out from the nozzle with a diameter of 2 mm and a length of 8 mm per unit time (10 minutes) under a load of 5 kg at 297°C, using a melt indexer (manufactured by Toyo Seiki Seisaku-sho, Ltd.).

Mooney Viscosity

The Mooney viscosity was measured in accordance with ASTM D1646-15 and JIS K6300-1:2013. The measurement temperature is 100°C.

Particle Size of Magnesium Oxide

The 10% particle size (volume-based cumulative 10% particle size), 50% particle size (volume-based cumulative 50% particle size), and 90% particle size (volume-based cumulative 90% particle size) of magnesium oxide are measured by the laser diffraction and scattering method (ultrasonication method). To 0.700 g of magnesium oxide, 70 ml of ethanol is added, and ultrasonication is carried out for 3 minutes to prepare a sample solution. Methanol is added to the sample feeder of a laser diffraction type particle size distribution measuring apparatus, and the sample solution is added while circulating the methanol in the sample feeder. After 1 minute, measurements are carried out (30 seconds × 2 times), and the average value of the measured values of the two measurements is used as the particle size.

Tensile Elasticity

The thermoplastic polymer compositions produced in Examples and Comparative Examples were compression-molded with a heat press machine under conditions of 260°C and 5 MPa to fabricate sheet-like test specimens with a thickness of 0.5 mm, from which dumbbell-shaped test specimens with a distance between marked lines of 3.18 mm were punched out using an ASTM D638 Type V dumbbell. For the obtained dumbbell-shaped specimen, a tensile test was carried out at a tensile speed of 50 mm/min at 25°C in accordance with ASTM D638 with Autograph (AGS-J 5kN manufactured by Shimadzu Corporation), thereby measuring the tensile elasticity. The tensile elasticity was measured in the same manner.

Tensile Breaking Strength and Tensile Elongation at Break

The thermoplastic polymer compositions produced in Examples and Comparative Examples were compression-molded with a heat press machine under conditions of 260°C and 5 MPa to fabricate sheet-like test specimens with a thickness of 2 mm, from which dumbbell-shaped test specimens with a thickness of 2 mm and a width of 5 mm were punched out. For the obtained dumbbell-shaped test specimens, a tensile test was carried out under conditions of 50 mm/min in accordance with JIS-K6301 using Autograph (AGS-J 5kN manufactured by Shimadzu Corporation), thereby measuring the tensile breaking strength and tensile elongation at break at 25°C.

MIT Value

Pellets of the thermoplastic polymer compositions produced in Examples 1 to 2 and Comparative Examples 1 to 3 were formed under conditions with a die temperature of 250°C and 60 rpm using a kneading and extruding pellet generating apparatus (model: IMC-9413 model, manufactured by Imoto Machinery Co., Ltd., Φ14, L/D 20) equipped with a T-die with a width of 150 mm, thereby fabricating extruded sheets. The extruded sheets were cut to fabricate test specimens with a width of 12.7 mm, a length of 90 mm, and a thickness of 0.5 mm. The longitudinal direction of the test specimens is perpendicular to the extrusion direction.

Also, the thermoplastic polymer compositions produced in Example 3 and Comparative Example 4 were compression-molded with a heat press machine under conditions of 260°C and 5 MPa to fabricate test specimens with a width of 12.7 mm, a length of 90 mm, and a thickness of 0.5 mm.

The test specimens were mounted on an MIT testing machine (model No. 12176, (manufactured by Yasuda Seiki Seisakusho, Ltd.)), the test specimens were bent under conditions with a load of 1.5 kg, a folding angle of 135 degrees on each side, and a folding frequency of 175 times/min, and the number of times until the test specimens were cut (MIT value) was measured five times. The average value of the measured values of the five measurements was used as the MIT value.

Rate of Change in Pressure

A breaker plate into which a mesh (80/325/80) had been inserted was installed between the die and the head of an extruder, and a pressure gauge was installed upstream of the head to measure the pressure of the thermoplastic polymer composition (kneaded material) in the die.

The rate of change in pressure was calculated by the following expression:

$$\text{rate of change in pressure (\%)} = (X_t - X_0)/X_0$$

$X_0$: pressure applied to the kneaded material in the die at the time of extrusion initiation (MPa)
$X_t$: pressure applied to the kneaded material in the die after t minutes have elapsed since extrusion initiation (MPa) .

The following materials were used in Examples and Comparative Examples.

Magnesium Oxide (C1)

"Kyowamag (R) MF-150" (manufactured by Kyowa Chemical Industry Co., Ltd.)
MgO content (purity): 99.6% by mass
10% particle size: 0.35 $\mu$m
50% particle size: 0.72 $\mu$m
90% particle size: 1.36 $\mu$m

Magnesium Oxide (C2)

"Kyowamag (R) 150" (manufactured by Kyowa Chemical Industry Co., Ltd.)
MgO content (purity): 98.0% by mass
10% particle size: 1.99 $\mu$m
50% particle size: 4.46 $\mu$m
90% particle size: 11.9 $\mu$m

Magnesium Oxide (C3)

"MAGSARAT (R) ST" (manufactured by Kyowa Chemical Industry Co., Ltd.)
MgO content (purity): 98.0% by mass
10% particle size: 2.03 $\mu$m
50% particle size: 4.92 $\mu$m
90% particle size: 12.2 $\mu$m

Magnesium Oxide (C4)

"STARMAG (R) PSF-150" (manufactured by Konoshima Chemical Co., Ltd.)
MgO content (purity): 99.4% by mass
10% particle size: 0.31 $\mu$m
50% particle size: 0.58 $\mu$m

Example 1

Using an 8-inch open roll, 100 parts by mass of a VdF-based elastomer (VdF/TFE/HFP = 50/20/30 in molar ratio, Mooney viscosity at 100°C of 87), 0.3 parts by mass of a cross-linking agent bisphenol AF (manufactured by Daikin Industries, Ltd.), 1.45 parts by mass of a solid solution (BIS-AF-BTP 4:1 salt (bisphenol AF:BTP = 4:1 (mass ratio)), manufactured by Central Glass Co., Ltd.) of bisphenol AF and a chlorine atom-free crosslinking accelerator (benzyltriphenylphosphonium (BTP)), and 4 parts by mass of the magnesium oxide (C1) were kneaded to obtain a full compound of VdF-based elastomer.

30 parts by mass of the full compound of VdF-based elastomer described above was fed to 70 parts by mass of an ETFE (ethylene/TFE = 35/65 in molar ratio, melting point 220°C, MFR (297°C) 15.0 g/10 min) in a twin screw extruder (manufactured by Technovel Corporation, apparatus name: KZW15TW-60MG-NH(-700), bore diameter 15 mm, L /D60), and melt-kneaded under conditions with a cylinder temperature of 280°C and a screw speed of 400 rpm to produce pellets of the thermoplastic polymer composition. Using the obtained pellets, a variety of physical properties were measured by the methods described above. The results are shown in Table 1.

Comparative Example 1

Pellets of the thermoplastic polymer composition were produced in the same manner as in Example 1, except that the magnesium oxide (C1) was changed to the magnesium oxide (C2). The results are shown in Table 1.

Comparative Example 2

Pellets of the thermoplastic polymer composition were produced in the same manner as in Example 1, except that the magnesium oxide (C1) was changed to the magnesium oxide (C3). The results are shown in Table 1.

[Table 1]

Table 1

| | | Example 1 | Comparative Example 1 | Comparative Example 2 |
|---|---|---|---|---|
| Physical properties | | | | |
| MFR | g/10min | 13.7 | 11.5 | 12.0 |
| Tensile elasticity | MPa | 231 | 247 | 235 |
| Tensile breaking strength | MPa | 28 | 31 | 30 |
| Tensile elongation at break | % l | 468 | 464 | 450 |
| MIT value | Times | 22.297 | 18,524 | 17.180 |
| Rate of change in pressure | | | | |
| Rate of change after 30 min | % | <5 | 34 | 12 |
| Rate of change after 60 min | % | <5 | 64 | 32 |

The thermoplastic polymer composition of Comparative Example 1 has the same components as the thermoplastic polymer composition of Example 1, except that instead of the magnesium oxide (C1), it contains the magnesium oxide (C2), which has a volume-based 10% particle size of 1.99 $\mu$m. As shown in Table 1, the MIT value of the thermoplastic polymer composition of Example 1 is 1.20 times the MIT value of the thermoplastic polymer composition of Comparative Example 1, indicating that it has excellent bending resistance.

In addition, as shown in Table 1, in the production method for the thermoplastic polymer composition of Example 1, the rate of change in pressure when the extrusion of the kneaded material from the die was continued for 60 minutes was less than 5%, indicating that it enables production with high productivity.

Example 2

Pellets of the thermoplastic polymer composition were produced in the same manner as in Example 1, except that 80 parts by mass of an ETFE (ethylene/TFE = 35/65 in molar ratio, melting point 220°C, MFR (297°C) 28.9 g/10 min) and 20 parts by mass of the full compound of VdF-based elastomer were melt-kneaded at a screw speed of 300 rpm. The results are shown in Table 2.

Comparative Example 3

Pellets of the thermoplastic polymer composition were produced in the same manner as in Example 2, except that the magnesium oxide (C1) was changed to the magnesium oxide (C2). The results are shown in Table 2.

[Table 2]

Table 2

|  |  | Example 2 | Comparative Example 3 |
|---|---|---|---|
| Physical properties |  |  |  |
| MFR | g/10min | 19.7 | 19.4 |
| Tensile elasticity | MPa | 310 | 306 |
| Tensile breaking strength | MPa | 29 | 30 |
| Tensile elongation at break | % | 480 | 480 |
| MIT value | Times | 21,500 | 17,300 |
| Rate of change in pressure |  |  |  |
| Rate of change after 30 min | % | <5 | 17 |
| Rate of change after 60 min | % | <5 | 38 |

Example 3

A full compound of VdF-based elastomer was obtained in the same manner as in Example 1, except that the magnesium oxide (C1) was changed to the magnesium oxide (C4).

In LABO PLASTOMILL (manufactured by Toyo Seiki Seisakusho, Ltd.), 59.9 g of an ETFE (ethylene/TFE = 35/65 in molar ratio, melting point 220°C, MFR (297°C) 15.0 g/10 min) was placed, and after visually checking that it was sufficiently melted, 25.7 g of the full compound of VdF elastomer described above was placed therein, and the screw speed was increased to 100 rpm. Stirring was continued until the dispersion and reaction sufficiently proceeded to result in a stable torque, thereby producing a thermoplastic polymer composition. The results are shown in Table 3.

Comparative Example 4

A thermoplastic polymer composition was produced in the same manner as in Example 3, except that the magnesium oxide (C4) was changed to the magnesium oxide (C2). The results are shown in Table 3.

[Table 3]

Table 3

|  |  | Example 3 | Comparative Example 4 |
|---|---|---|---|
| Physical properties |  |  |  |
| MFR | g/10min | 1.8 | 1.5 |
| Tensile elasticity | MPa | 226 | 225 |
| Tensile breaking strength | MPa | 28 | 26 |
| Tensile elongation at break | % | 430 | 410 |
| MIT value | Times | 779,377 | 635,803 |

Experimental Example 1

A thermoplastic polymer composition in a block form was produced in the same manner as in Example 3, except that the magnesium oxide (C4) was changed to the magnesium oxide (C1). The obtained thermoplastic polymer composition was cut with a microtome, and the cutting section was observed using a scanning electron microscope (SEM) (SU-8020 manufactured by Hitachi High-Tech Corporation, accelerating voltage 5 KV). An image of the cutting section is shown in Figure 1.

Experimental Example 2

The thermoplastic polymer composition in a block form obtained in Comparative Example 4 was cut with a microtome, and the cutting section was observed using a scanning electron microscope (SEM). An image of the cutting section is shown in Figure 2.

As shown in the image of Figure 2, it can be seen that aggregated clumps are observed in the thermoplastic polymer composition (Comparative Example 4), which contains magnesium oxide with a volume-based 10% particle size of more than 1.0 $\mu$m. Also, an elemental mapping image of magnesium elements (not shown) acquired at the same time showed that these aggregated clumps contained magnesium elements. Accordingly, it is presumed that these aggregated clumps are formed of magnesium oxide. On the other hand, as shown in the image of Figure 1, it can be seen that no aggregated clumps are observed in the thermoplastic polymer composition (Experimental Example 1), which contains magnesium oxide with a volume-based 10% particle size of 1.0 $\mu$m or less, and that each component is well dispersed.

**Claims**

1. A thermoplastic polymer composition comprising a fluororesin (A), a crosslinked fluoroelastomer (B), and a magnesium oxide (C),

   wherein the fluororesin (A) is a copolymer that contains ethylene unit and tetrafluoroethylene unit;
   wherein the crosslinked fluoroelastomer (B) is obtained by subjecting a fluoroelastomer (b) to a dynamic crosslinking treatment in the presence of the fluororesin (A), the magnesium oxide (C), and a cross-linking agent (D) under conditions for melting the fluororesin (A);
   wherein the magnesium oxide (C) has a volume-based 10% particle size of 1.0 $\mu$m or less; and
   wherein a mass ratio between the fluororesin (A) and the crosslinked fluoroelastomer (B) ((A)/(B)) is 50/50 to 95/5.

2. The thermoplastic polymer composition according to claim 1, wherein the magnesium oxide (C) has a volume-based 50% particle size of 1.0 $\mu$m or less.

3. The thermoplastic polymer composition according to claim 1 or 2, wherein a content of the magnesium oxide (C) is 0.01 to 10 parts by mass based on 100 parts by mass of the fluoroelastomer (b).

4. The thermoplastic polymer composition according to any one of claims 1 to 3, wherein the fluororesin (A) has a melting point of 160 to 320°C.

5. The thermoplastic polymer composition according to any one of claims 1 to 4, wherein the fluoroelastomer (b) is a partially fluorinated elastomer.

6. The thermoplastic polymer composition according to any one of claims 1 to 5, wherein the fluoroelastomer (b) is at least one selected from the group consisting of a vinylidene fluoride/hexafluoropropylene-based fluoroelastomer, a vinylidene fluoride/tetrafluoroethylene/hexafluoropropylene-based fluoroelastomer, and a tetrafluoroethylene/propylene-based fluoroelastomer.

7. The thermoplastic polymer composition according to any one of claims 1 to 6, wherein the cross-linking agent (D) is at least one selected from the group consisting of a polyhydroxy compound, a polyamine compound, and a peroxide.

8. The thermoplastic polymer composition according to any one of claims 1 to 7, exhibiting an MIT value that is equal to or more than 1.2 times an MIT value of a thermoplastic polymer composition that has the same components, except that the magnesium oxide (C) is replaced by a magnesium oxide with a volume-based 10% particle size of 1.99 $\mu$m.

9. The thermoplastic polymer composition according to any one of claims 1 to 8,

   wherein the fluororesin (A) is a copolymer in which a molar ratio between ethylene unit and tetrafluoroethylene unit (ethylene unit/TFE unit) is 10/90 to 62/38, and a content of ethylene unit and tetrafluoroethylene unit is 90 to 100 mol% based on the entire monomer units;

wherein the fluoroelastomer (b) is a vinylidene fluoride/hexafluoropropylene-based elastomer in which a molar ratio of vinylidene fluoride/hexafluoropropylene is 45 to 85/55 to 15, or a vinylidene fluoride/tetrafluoroethylene/hexafluoropropylene-based fluoroelastomer in which a molar ratio of vinylidene fluoride/tetrafluoroethylene/hexafluoropropylene is 40 to 80/10 to 35/10 to 35;

wherein the magnesium oxide (C) has a volume-based 10% particle size of 0.1 to 0.4 $\mu$m;

wherein the cross-linking agent (D) is a polyhydroxy compound;

wherein a mass ratio between the fluororesin (A) and the crosslinked fluoroelastomer (B) ((A)/(B)) is 60/40 to 85/15; and

wherein the thermoplastic polymer composition has a melt flow rate (297°C) of 1.0 to 30 g/10 min.

10. The thermoplastic polymer composition according to any one of claims 1 to 9, which is a pellet.

11. A formed article obtained by forming the thermoplastic polymer composition according to any one of claims 1 to 10.

12. The formed article according to claim 11, which is a tube or a hose.

13. A method for producing the thermoplastic polymer composition according to any one of claims 1 to 10,
wherein, using an extruder equipped with a cylinder and a die, a fluoroelastomer composition containing the fluororesin (A), the fluoroelastomer (b), the magnesium oxide (C), and the cross-linking agent (D) is kneaded in the cylinder at a temperature of a melting point of the fluororesin (A) or higher, and a resulting kneaded material is extruded from the die, thereby obtaining a pellet of the thermoplastic polymer composition.

14. The production method according to claim 13, wherein, when the extrusion of the kneaded material from the die is continued for 60 minutes, a rate of change in pressure calculated by the following expression is 5% or less:

$$\text{rate of change in pressure (\%)} = (X_{60} - X_0)/X_0$$

$X_0$: pressure applied to the kneaded material in the die at the time of extrusion initiation (MPa)

$X_{60}$: pressure applied to the kneaded material in the die after 60 minutes have elapsed since extrusion initiation (MPa).

Figure 1

Figure 2

## INTERNATIONAL SEARCH REPORT

| | |
|---|---|
| International application No. | |
| | **PCT/JP2024/026668** |

### A. CLASSIFICATION OF SUBJECT MATTER

*C08L 27/18*(2006.01)i; *B29B 9/12*(2006.01)i; *C08K 3/011*(2018.01)i; *C08K 3/22*(2006.01)i; *C08L 15/02*(2006.01)i;
*F16L 11/04*(2006.01)i
FI: C08L27/18; C08L15/02; C08K3/22; C08K3/011; B29B9/12; F16L11/04

According to International Patent Classification (IPC) or to both national classification and IPC

### B. FIELDS SEARCHED

Minimum documentation searched (classification system followed by classification symbols)

C08L27/18; B29B9/12; C08K3/011; C08K3/22; C08L15/02; F16L11/04

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2013-23629 A (DAIKIN INDUSTRIES, LTD.) 04 February 2013 (2013-02-04) | 1-14 |
| A | WO 2006/057331 A1 (DAIKIN INDUSTRIES, LTD.) 01 June 2006 (2006-06-01) | 1-14 |
| A | JP 6-157032 A (KAISUI KAGAKU KENKYUSHO KK) 03 June 1994 (1994-06-03) | 1-14 |
| A | CN 104087030 A (HEBEI UNIVERSITY OF SCIENCE AND TECHNOLOGY) 08 October 2014 (2014-10-08) | 1-14 |
| A | JP 2016-106160 A (KONOSHIMA CHEMICAL CO., LTD.) 16 June 2016 (2016-06-16) | 1-14 |
| A | JP 10-48989 A (RICOH COMPANY, LTD.) 20 February 1998 (1998-02-20) | 1-14 |
| A | JP 2021-181258 A (SUMITOMO RUBBER INDUSTRIES, LTD.) 25 November 2021 (2021-11-25) | 1-14 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 September 2024** | **17 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

International application No.

**PCT/JP2024/026668**

| Patent document cited in search report | | | Publication date (day/month/year) | Patent family member(s) | | | Publication date (day/month/year) |
|---|---|---|---|---|---|---|---|
| JP | 2013-23629 | A | 04 February 2013 | (Family: none) | | | |
| WO | 2006/057331 | A1 | 01 June 2006 | US | 2009/0011164 | A1 | |
| | | | | EP | 1816162 | A1 | |
| | | | | CN | 101065440 | A | |
| | | | | KR | 10-2007-0086648 | A | |
| JP | 6-157032 | A | 03 June 1994 | (Family: none) | | | |
| CN | 104087030 | A | 08 October 2014 | (Family: none) | | | |
| JP | 2016-106160 | A | 16 June 2016 | US | 2016/0053073 | A1 | |
| | | | | EP | 2980021 | A1 | |
| | | | | CN | 105050955 | A | |
| | | | | KR | 10-2015-0100798 | A | |
| JP | 10-48989 | A | 20 February 1998 | (Family: none) | | | |
| JP | 2021-181258 | A | 25 November 2021 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006057331 A
- JP 5063482 A
- JP 7316234 A